(19) Europäisches Patentamt
European Patent Office
Office européen des brevets

(11) Veröffentlichungsnummer : **0 132 747**
**B1**

(12) # EUROPÄISCHE PATENTSCHRIFT

(45) Veröffentlichungstag der Patentschrift : **20.01.88**

(51) Int. Cl.[4] : **C 08 G 59/68**, H 01 B 3/40

(21) Anmeldenummer : **84108359.5**

(22) Anmeldetag : **16.07.84**

(54) **Reaktionsharzmassen zum Imprägnieren und Vergiessen von grossvolumigen Bauteilen.**

(30) Priorität : **29.07.83 DE 3327708**

(43) Veröffentlichungstag der Anmeldung : **13.02.85 Patentblatt 85/07**

(45) Bekanntmachung des Hinweises auf die Patenterteilung : **20.01.88 Patentblatt 88/03**

(84) Benannte Vertragsstaaten : **CH DE FR GB IT LI SE**

(56) Entgegenhaltungen :
**EP-A- 0 034 309**
**FR-A- 1 327 458**
**GB-A- 1 161 889**

(73) Patentinhaber : **Siemens Aktiengesellschaft Berlin und München**
**Wittelsbacherplatz 2**
**D-8000 München 2 (DE)**

(72) Erfinder : **Hacker, Heinz, Dr.**
**Kaiserslauterer Strasse 9**
**D-8500 Nürnberg (DE)**
Erfinder : **Laupenmühlen, Heinz-Klaus**
**Dr. Georg-Dassler-Strasse 20**
**D-8551 Hemhofen (DE)**
Erfinder : **Ihlein, Walter, Dr.**
**Glockenturmstrasse 36**
**D-1000 Berlin 19 (DE)**
Erfinder : **Mertens, Willi, Dr.**
**Schützallee 100**
**D-1000 Berlin 37 (DE)**

EP 0 132 747 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Reaktionsharzmassen auf der Basis von anionisch polymerisierbaren di- oder trifunktionellen Epoxidharzen zum Imprägnieren und/oder Vergießen von großvolumigen Bauteilen, insbesondere für die Kryotechnik.

Bei der Verwendung von Kunststoffen, beispielsweise von Imprägnierharzen, insbesondere in der Kryotechnik, stellen — im Temperaturbereich von etwa 4 bis 100 K — die ungenügende mechanische Festigkeit und Flexibilität der Kunststoffe ein Problem dar. An Imprägnierharze für großvolumige Bauteile, beispielsweise an solche, die zur Imprägnierung supraleitender Magnetspulen dienen, werden eine Reihe von Forderungen gestellt, die bislang insgesamt nicht erfüllt werden können, nämlich :

— niedrige Ausgangsviskosität (etwa 20 bis 100 mPa · s)

— lange Gebrauchsdauer (bis zu 50 h bei der Imprägniertemperatur)

— hohes mechanisches Festigkeitsniveau

— Temperaturwechselbeständigkeit

— gute Haftung auf Edelstählen und Nichteisenmetallen (NE-Metalle)

— hoher Reaktionsschwund in der flüssigen Phase und geringer Reaktionsschwund in der Gelphase, sowie

— gegebenenfalls hohe Strahlenresistenz (bis zu $3 \cdot 10^6$ kGy).

Vorschläge für Reaktionsharzformstoffe für die Kryotechnik mit verbesserter Festigkeit und Flexibilität sind bekannt, beispielsweise Additionsprodukte auf Basis von Bisphenol-A-Epoxidharzen, Dodecylbernsteinsäureanhydrid und aliphatischen Tricarbonsäuren sowie auf Basis einer Mischung aus Bisphenol-A-Harz, aliphatischem Epoxidharz, Diurethanprepolymeren und 4 · 4'-Methylen-bis(2-chloranilin). Derartige Verbindungen bewirken aber nur eine beschränkte Verbesserung.

Als thermisches und elektrisches Isoliermaterial für die Kryotechnik wurden ferner bereits teilkristalline vernetzte Polymere vorgeschlagen, welche eine Schmelzenthalpie von 30 bis 80 $kJ \cdot kg^{-1}$ besitzen und aus 2 bis 14 Methylengruppen bestehende Sequenzen aufweisen, die untereinander mit Oxycarbonylgruppen verbunden sind (EP-A1-0 042 356). Derartige Polymere, die in Form von Behältern und Röhren oder als Bestandteil von Laminaten und Verbundstoffen eingesetzt werden, sind beispielsweise Vernetzungsprodukte aus kristallinen aliphatischen Polyestern mit einem Molekulargewicht zwischen 1 000 und 10 000, welche saure Endgruppen enthalten, und Verbindungen mit mindestens drei Epoxidgruppen als Vernetzungsmittel (Härtungsmittel). Nachteilig wirken sich bei diesen Systemen die hohe Viskosität und die kurze Gebrauchsdauer aus.

Es wurde ferner bereits ein Isolationssystem für Magnete in Experimentieranlagen der Fusions- und Hochenergieforschung beschrieben, das sich für Wicklungstemperaturen im Bereich von — 270 bis + 155 °C eignen und durch eine hohe Strahlenbeständigkeit und ausgezeichnete mechanische Festigkeit auszeichnen soll (« Brown Boveri Mitteilungen », Bd. 65 (1978), Seiten 326 bis 333). Das Imprägnierharz dieser Isolation besteht im Prinzip aus einem modifizierten strahlenbeständigen Epoxidharz vom Bisphenol-A-Typ, einem Härter auf Anhydridbasis und einem latenten Beschleuniger ; mit diesem Harz sollen sich auch große Isolationsdicken und große Spulen, die beträchtliche Harzvolumina erfordern, imprägnieren lassen. Bekannt sind ferner auch Imprägnierharze aus Epoxiden und primären oder sekundären Aminen als Härter.

In der Praxis zeigt sich jedoch, daß, vor allem bei großvolumigen Teilen, die Gebrauchsdauer additiv härtender Systeme, d. h. von Systemen aus Epoxiden und Säureanhydriden bzw. primären oder sekundären Aminen, wegen des hohen Zeitbedarfs für die Durchtränkung kaum ausreichend ist, und daß oft Härtungstemperaturen notwendig sind, die die thermische Belastbarkeit, beispielsweise von supraleitenden Legierungen, überschreiten.

Aufgabe der Erfindung ist es, Reaktionsharzmassen der eingangs genannten Art zum Imprägnieren und/oder Vergießen von großvolumigen Bauteilen anzugeben, durch die sämtliche der an derartige Imprägnierharze — bzw. an die daraus hergestellten Reaktionsharzformstoffe — zu stellenden Forderungen in hohem Maße erfüllt werden.

Dies wird erfindungsgemäß dadurch erreicht, daß die Reaktionsharzmassen als Polymerisationskatalysatoren tertiäre Amine der allgemeinen Formel

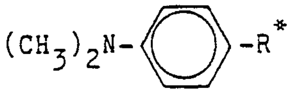 ,

wobei für R* folgendes gilt :

R* = —H, 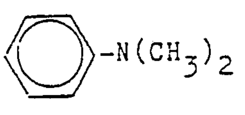 oder 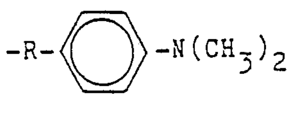 ,

und R folgende Bedeutung hat :

$>CH_2$, $>CHOH$, $>CO$, $>CS$,

$-O-$, $-S-$, $>SO_2$, 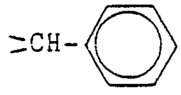 , 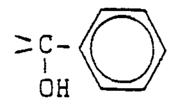 ,

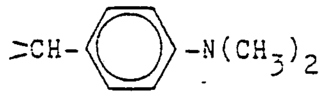 und 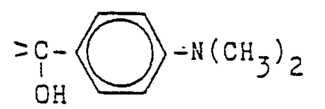 ,

in einer Konzentration von 0,5 bis 10 Masseteilen, vorzugsweise 4 bis 6 Masseteilen, enthalten, jeweils bezogen auf 100 Masseteile Epoxidharz.

Die erfindungsgemäßen Reaktionsharzmassen bzw. die daraus hergestellten Reaktionsharzformstoffe erfüllen die Forderungen bezüglich Ausgangsviskosität, Gebrauchsdauer, Haftung, Reaktionsschwund, mechanischer Festigkeit, Temperaturwechselbeständigkeit und Strahlenresistenz weitestgehend. Darüber hinaus weisen diese Reaktionsharzmassen Vernetzungstemperaturen $< 130$ °C auf, was insbesondere im Zusammenhang mit supraleitenden Legierungen von Bedeutung ist.

Der erfindungsgemäßen Reaktionsharzmassen liegen anionisch polymerisierbare di- oder trifunktionelle Epoxidharze zugrunde, gegebenenfalls im Gemisch mit monofunktionellen Epoxidverbindungen. Derartige Epoxidharze sind im allgemeinen aromatische Polyglycidylether. Diese aromatischen Polyglycidylether werden dann, gegebenenfalls zusammen mit Füllstoffen und auch weiteren Additiven, einer anionischen, d. h. basisch initiierten Polymerisation unterworfen. Dabei können die entsprechenden Epoxidharze sowohl in reiner Form als auch in Form von Gemischen untereinander eingesetzt werden.

Als Epoxidharze finden in den erfindungsgemäßen Reaktionsharzmassen vorzugsweise aromatische Polyglycidylether der allgemeinen Formel

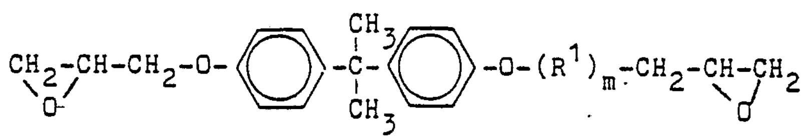 ,

mit $R^1$ = 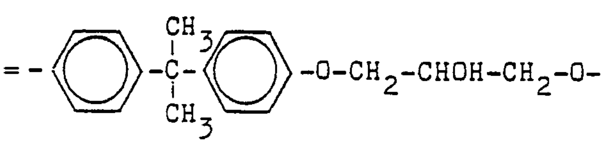 und

$m = 0$ bis 0,2 (vorzugsweise 0),
und/oder der allgemeinen Formel

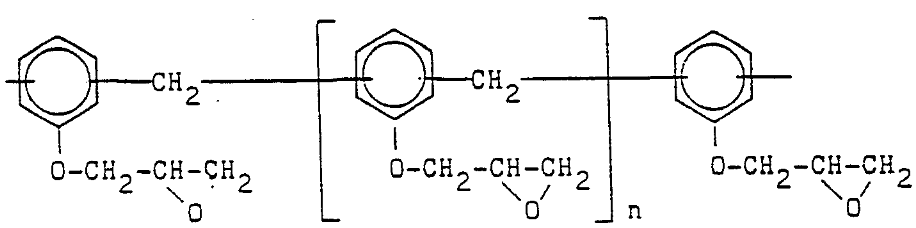 ,

wobei $n = 0$ bis 1,5 (vorzugsweise 0) ist, Verwendung.

Vorzugsweise wird als Epoxidharz Bisphenol-F-diglycidylether eingesetzt ; damit werden Polymerisate mit einer guten Strahlenresistenz erhalten. Eine besonders hohe Strahlenresistenz wird dann erreicht, wenn als Epoxidharz Bisphenol-F-diglycidylether und/oder epoxidiertes Novolak und als Polymerisationskatalysator Michlers Keton ($R = >CO$) eingesetzt wird, d. h. folgende Verbindung :

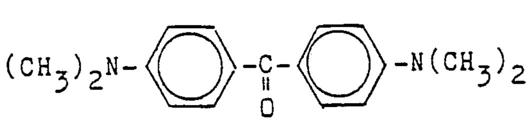 .

Als Polymerisationskatalysator selbst wird neben Michlers Keton bevorzugt das entsprechende Benzhydrol eingesetzt. Das Benzhydrol-Derivat ($R = >CHOH$) bietet den Vorteil, daß es bei der

Polymerisation in das Polymernetzwerk eingebaut wird. Im allgemeinen werden die mehrkernigen Polymerisationskatalysatoren bevorzugt, und darunter diejenigen der Struktur

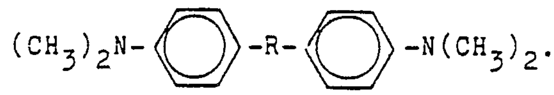

Die erfindungsgemäßen Reaktionsharzmassen können — neben den aromatischen Polyglycidylethern — vorteilhaft aliphatische Polyglycidylether, gegebenenfalls auch aliphatische oder aromatische Monoglycidylether, enthalten, und zwar bis zu einem Anteil von 25 Masse-%, vorzugsweise bis zu 10 Masse-%. Bevorzugt werden dabei Diglycidylether der allgemeinen Formel

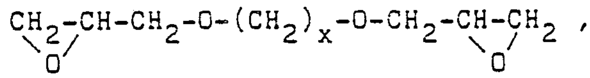

mit x = 4 bis 10. Unter diesen Verbindungen sind 1.4-Butylenglykoldiglycidylether (x = 4) und 1.6-Hexylenglykoldiglycidylether (x = 6) besonders bevorzugt.

Die erfindungsgemäßen Reaktionsharzmassen eignen sich insbesondere für die Imprägnierung von Spulen, beispielsweise für die Imprägnierung supraleitender Toroidalfeldspulen.

Anhand von Ausführungsbeispielen soll die Erfindung noch näher erläutert werden.

## Beispiel 1

Für den imprägnierenden Verguß einer 40 t schweren Toroidalfeldspule mit den Außenmaßen 4,5 × 3,5 × 0,58 $m^3$ und einem Wicklungsquerschnitt von 0,58 × 0,53 $m^2$ werden 580 kg Bisphenol-F-diglycidylether (Epoxidzahl EZ = 0,617 mol/100 g ; OH-Zahl OHZ = 0,055 mol/100 g) auf 80 °C erwärmt und unter Rühren mit 29 kg 4.4'-Bis(dimethylamino)-benzophenon (Michlers Keton), Smp. 173 °C, versetzt. Nachdem sich das Michlers Keton aufgelöst hat, wird — bei 80 °C — 2 h bei einem Druck < 1 mbar entgast. Die erhaltene Mischung weist eine Viskosität $\eta$80 °C = 30 mPa · s auf und ist als Imprägnierharz gebrauchsfertig. In Tabelle 1 ist der Viskositätsaufbau $\eta$ = f(Zeit) dieses Imprägnierharzes — bei T = const. — angegeben, und zwar für Temperaturen von 80, 90 und 100 °C. Die Imprägnierzeit, d. h. ist für die vollständige Durchtränkung der Wicklung der Toroidalfeldspule benötigte Zeit, betrug 28 h (Imprägniertemperatur : 80 °C). Nach dem Imprägnieren wurde für die Dauer von 95 h bei einer Temperatur von 100 °C gehärtet.

Tabelle 1

| Temperatur °C | Zeit h: 10 | 20 | 50 | 70 | 90 |
|---|---|---|---|---|---|
| 80 | 30 mPa·s | 30 mPa·s | 35 mPa·s | 65 mPa·s | 200 mPa·s |
| 90 | 25 mPa·s | 25 mPa·s | 100 mPa·s | 1000 mPa·s | - |
| 100 | 20 mPa·s | 110 mPa·s | - | - | - |

In Tabelle 2 sind für das vorstehend angegebene Imprägnierharz die Verarbeitungszeiträume für Grenzviskositäten von 100 und 200 mPa · s bei Verarbeitungs-, d. h. Imprägniertemperaturen von 80, 90 und 100 °C aufgeführt.

(Siehe Tabelle 2 Seite 5 f.)

Tabelle 2

| Temperatur °C | Grenzviskosität 100 mPa·s | Grenzviskosität 200 mPa·s |
|---|---|---|
| 80 | 78 h | 90 h |
| 90 | 50 h | 54 h |
| 100 | 19 h | 22 h |

Beispiel 2

Entsprechend Beispiel 1 wird aus 115 kg Bisphenol-F-diglycidylether und 5,75 kg Michlers Keton ein Imprägnierharz hergestellt. Mit diesem Imprägnierharz wurde ein Wicklungsmodell mit den Abmessungen 3 × 0,58 × 0,53 $m^3$ imprägniert (Imprägnierzeit : 11h). Anschließend wurde 30 h bei 100 °C und 25 h bei 130 °C gehärtet.

Beispiel 3

Als Vergleich zum Einkomponenten-Imprägnierharz auf der Basis von Bisphenol-F-diglycidylether nach den Beispielen 1 und 2 dient ein Zweikomponenten-Imprägnierharz auf der Basis von Bisphenol-F-diglycidylether und Endomethylentetrahydrophthalsäureanhydrid. Zur Herstellung dieses Imprägnierharzes (Harz III) werden 100 MT Bisphenol-F-diglycidylether (EZ = 0,617 mol/100 g ; OHZ = 0,055 mol/100 g), 100 MT Endomethylentetrahydrophthalsäureanhydrid und 0,2 MT 2.4.6-Tris(dimethylaminomethyl)-phenol bei 80 °C unter Rühren vermischt. Das dabei erhaltene Harz weist eine Viskosität $\eta$120 °C = 30 mPa · s auf. Der Verarbeitungszeitraum dieses Harzes bei 120 °C beträgt für die Grenzviskositäten 100 und 200 mPa · s 45 bzw. 50 min.

Das erfindungsgemäße Einkomponenten-Imprägnierharz entsprechend den Beispielen 1 und 2 wird nach zwei verschiedenen Methoden polymerisiert :

Harz I : 30 h bei 100 °C und 25 h bei 130 °C ;

Harz II : 95 h bei 100 °C.

Die mechanischen Eigenschaften der dabei aus dem Imprägnierharz erhaltenen Epoxidharzpolymerisate — in Form der Schlagzähigkeit SZ (nach DIN 53 453) und der Biegefestigkeit BF (nach DIN 53 542) — wurden an umgefüllten Normstäben (15 × 10 × 120 $mm^3$) ermittelt ; die Meßergebnisse — bei Raumtemperatur (300 K) bzw. 77 K — sind in Tabelle 3 enthalten.

Das zum Vergleich dienende Zweikomponenten-Imprägnierharz (Harz III) wurde 7 h bei 100 °C und 15 h bei 120 °C gehärtet. Die an ungefüllten Normstäben ermittelten mechanischen Eigenschaften (bei 300 bzw. 77 K) sind ebenfalls in Tabelle 3 enthalten.

Tabelle 3

| | | SZ in $\frac{kJ}{m^2}$ | BF in $\frac{N}{mm^2}$ |
|---|---|---|---|
| Harz I | 300 K | 50 | 130 |
| Harz II | 300 K | 56 | 138 |
| Harz III | 300 K | 17 | 71 |
| Harz I | 77 K | 22 | 188 |
| Harz II | 77 K | 29 | 168 |
| Harz III | 77 K | 11 [1] | 122 [2] |

[1]) 30 % der Prüfstäbe beim Abkühlen gerissen.
[2]) 40 % der Prüfstäbe beim Abkühlen gerissen.

Beispiel 4

Zur Ermittlung der Haftfestigkeit des erfindungsgemäßen Imprägnierharzes auf Metalloberflächen wurde — in Anlehnung an DIN 53 288 — zwischen die Klebflächen in Stirnzugproben zur Simulation einer Lagenisolierung eine Lage Glasgewebe eingelegt.

Probenabmessung : 33 mm Außendurchmesser, 18 mm Innendurchmesser

Probenmaterial : nichtrostender Stahl

Glasgewebe : GLS 50, 40 · 40 · 0,15 mm silaniert, entschlichtet

Harz : Einkomponenten-Imprägnierharz wie vorstehend angegeben.

Das Imprägnierharz wurde 95 h bei 100 °C polymerisiert, dann wurde die Zugfestigkeit ermittelt. Dabei ergaben sich — bei verschiedenen Temperaturen — folgende Werte :

300 K : 58,9 N/mm$^2$ ;
77 K : 116,5 N/mm$^2$ ;
4,2 K : 138,1 N/mm$^2$.

**Patentansprüche**

1. Durch anionische Polymerisation härtbare Reaktionsharzmassen auf der Basis von anionisch polymerisierbaren di- oder trifunktionellen Epoxidharzen zum Imprägnieren und/oder Vergießen von großvolumigen Bauteilen, insbesondere für die Kryotechnik, dadurch gekennzeichnet, daß sie als Polymerisationskatalysatoren tertiäre Amine der allgemeinen Formel

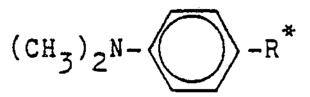 ,

wobei für R* folgendes gilt :

R* = —H, 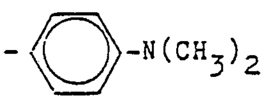 oder 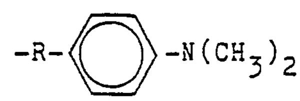 ,

und R folgende Bedeutung hat :

$>CH_2$, $>CHOH$, $>CO$, $>CS$,

$-O-$, $-S-$, $>SO_2$, 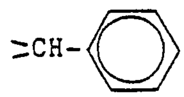 , 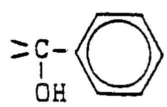 ,

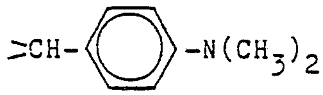 und 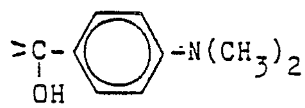 ,

in einer Konzentration von 0,5 bis 10 Masseteilen, vorzugsweise 4 bis 6 Masseteilen, enthalten, jeweils bezogen auf 100 Masseteile Epoxidharz.

2. Reaktionsharzmassen nach Anspruch 1, dadurch gekennzeichnet, daß die Polymerisationskatalysatoren tertiäre Amine folgender Struktur sind :

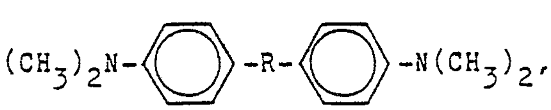,

wobei R wie vorstehend definiert ist.

3. Reaktionsharzmassen nach Anspruch 2, dadurch gekennzeichnet, daß der Polymerisationskatalysator Michlers Keton (R = $>CO$) und/oder das entsprechende Benzhydrol (R = $>CHOH$) ist.

4. Reaktionsharzmassen nach einem der Ansprüche 1 bis 3, dadurch gekennzeichnet, daß das Epoxidharz Bisphenol-F-diglycidylether ist.

5. Reaktionsharzmassen nach einem oder mehreren der Ansprüche 1 bis 4, dadurch gekennzeichnet, daß sie aliphatische Diglycidylether bis zu einem Anteil von 25 Masse-%, vorzugsweise bis zu 10 Masse-%, enthalten.

6. Reaktionsharzmassen nach Anspruch 5, dadurch gekennzeichnet, daß sie 1.4-Butylenglykoldiglycidylether oder 1.6-Hexylenglykoldiglycidylether enthalten.

**Claims**

1. Reaction resin materials which can be cured by anionic polymerisation having a basis of anionically polymerisable di- or trifunctional epoxy resins for impregnating and/or coating voluminous components, in particular for cryogenics, characterised in that they contain as polymerisation catalysts tertiary amines of the general formula :

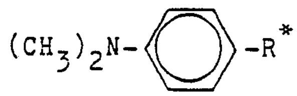 ,

in which

R* = —H, 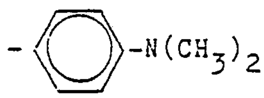 oder 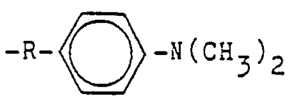 ,

and R has the following meaning :

$\geq CH_2$, $\geq CHOH$, $\geq CO$, $\geq CS$,

-O-, -S-, $\geq SO_2$, 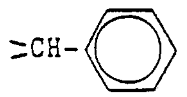 , 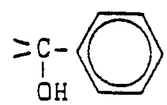 ,

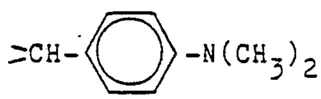 und 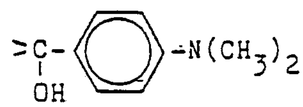 ,

in a concentration of 0.5 to 10 parts by weight, preferably 4 to 6 parts by weight, in each case with reference to 100 parts by weight of epoxy resin.

2. Reaction resin materials as claimed in Claim 1, characterised in that the polymerisation catalysts are tertiary amines of the following structure :

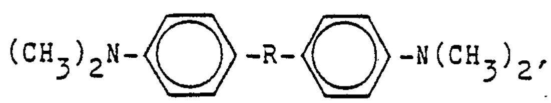

in which R is as previously defined..

3. Reaction resin materials as claimed in Claim 2, characterised in that the polymerisation catalyst is Michler's ketone (R = $\geq$CO) and/or the corresponding benzhydrol (R = $\geq$CHOH).

4. Reaction resin materials as claimed in one of Claims 1 to 3, characterised in that the epoxy resin is bisphenol-F-diglycidyl ether.

5. Reaction resin materials as claimed in one or more of Claims 1 to 4, characterised in that they contain aliphatic diglycidyl ethers up to a proportion of 25 % by weight, preferably up to 10 % by weight.

6. Reaction resin materials as claimed in Claim 5, characterised in that they contain 1.4-butyleneglycoldiglycidyl ether or 1.6-hexyleneglycoldiglycidyl ether.

**Revendications**

1. Résines composites susceptibles de durcir par polymérisation anionique et à base de résines époxydiques di- ou trifonctionnelles, pouvant subir une polymérisation anionique, destinées à imprégner et/ou à sceller des éléments de structure de grand volume, notamment pour la technique cryogénique, caractérisées en ce qu'elles contiennent, comme catalyseur de polymérisation, des amines tertiaires de formule développée

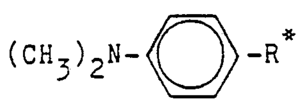 ,

dans laquelle R* a les significations suivantes :

R* = —H, 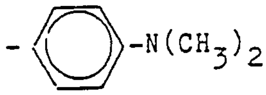 oder 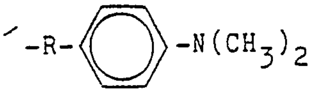 ,

et R a les significations suivantes :

≥$CH_2$, ≥CHOH, ≥CO, ≥CS,

-O-, -S-, ≥$SO_2$, 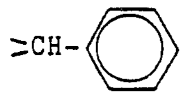 , 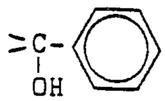 ,

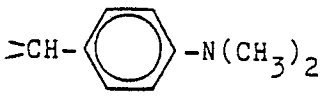 und 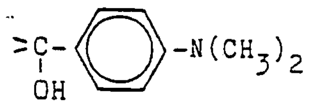 ,

en une concentration de 0,5 à 10 parties en poids et de préférence de 4 à 6 parties en poids pour 100 parties en poids de résine époxydique.

2. Résines composites suivant la revendication 1, caractérisées en ce que les catalyseurs de polymérisation sont des amines tertiaires ayant la structure suivante :

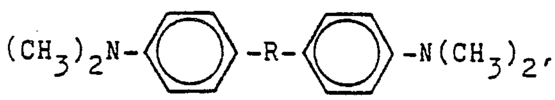

dans laquelle R est tel que défini ci-dessus.

3. Résines composites suivant la revendication 2, caractérisées en ce que le catalyseur de polymérisation est la cétone de Michler (R = ≥CO) et/ou l'alcool correspondant (R = ≥CHOH).

4. Résines composites suivant l'une des revendications 1 à 3, caractérisées en ce que la résine époxydique est l'éther diglycidylique du bisphénol F.

5. Résines composites suivant l'une ou plusieurs des revendications 1 à 4, caractérisées en ce qu'elles contiennent des éthers diglycidyliques aliphatiques en une proportion allant jusqu'à 25 % en poids et de préférence jusqu'à 10 % en poids.

6. Résines composites suivant la revendication 5, caractérisées en ce qu'elles contiennent de l'éther diglycidylique, du 1,4-butylèneglycol ou de l'éther diglycidylique, du 1,6-hexylèneglycol.